# EUROPEAN PATENT APPLICATION

(11) **EP 4 712 284 A1**
(43) Date of publication of application: **18.03.2026**
(21) Application number: 25194884.0
(22) Date of filing: 08.08.2025
(51) Int. Cl.: H02J 1/10, H02J 7/00, B64D 31/18, B64D 41/00

(54) **POWER DISTRIBUTION SYSTEM AND METHOD OF OPERATING**

(30) Priority: 17.09.2024 US 202418887539
(71) Applicant: GE Aviation Systems LLC, Grand Rapids, MI 49512 (US)
(72) Inventor: DALAL, Manish Ashvinkumar, Orlando (US)
(74) Representative: Openshaw & Co.

(57) **Abstract**

A power distribution system (11), (111) for an aircraft (10), and method (400) of operating includes, including determining, by a supplemental electrical power system (30), an operating mode of the aircraft (10), selecting, by the supplemental electrical power system (30), at least one supplementary power source (34a), (34b), (34c) of a set of at least two supplementary power sources (34), and at least one of receiving, by the selected at least one supplementary power source (34a), (34b), (34c), a first current (51) from the primary power bus (23), or selectively providing a second current (52) to the primary power bus (23) from the selected at least one supplementary power source (34a), (34b), (34c).

## Description

### BACKGROUND

Electrical power distribution systems manage the allocation of power from energy sources to electrical loads that consume the distributed electrical power. In an aircraft, one or more turbine engines provide for propulsion of the aircraft, and can further provide mechanical energy to generate electricity that is supplied to a number of interconnected power buses. The power buses can be selectively connected by way of contactors, and ultimately power a number of different accessories such as environmental control systems (ECS), in-flight entertainment systems, windshield deicing, galleys, fuel pumps, and hydraulic pumps, e.g., equipment for functions needed on an aircraft other than propulsion. For example, contemporary aircraft utilize electrical power for electrical loads related to avionics, motors, and other electric equipment.

Contemporary aircraft engines also include electric machine assemblies, or generator systems, which utilize a running aircraft engine in a generator mode to provide electrical energy to power systems and components on the aircraft. Some aircraft engines can further include starter/generator (S/G) systems or motor/generator (M/G), which act as a motor to start an aircraft engine from its high pressure spool or a motor to drive the engine from its low pressure spool, and as a generator to provide electrical energy to power systems on the aircraft after the engine is running.

### BRIEF DESCRIPTION OF THE DRAWINGS

In the drawings:
FIG. 1 is a top-down schematic view of an aircraft and power distribution system of the aircraft, in accordance with various aspects described herein.
FIG. 2 is a schematic illustration of the power distribution system of the aircraft of FIG. 1, in accordance with various aspects described herein.
FIG. 3A is a schematic illustration of another aspect of the power distribution system, during an engine start mode of the aircraft in accordance with various aspects described herein.
FIG. 3B is a schematic illustration of the power distribution system of FIG. 2, during an engine start mode of the aircraft including an external power source, in accordance with various aspects described herein.
FIG. 4 is a schematic illustration of another aspect of the power distribution system, during an engine core assist mode of the aircraft, in accordance with various aspects described herein.
FIG. 5 is a schematic illustration of another aspect of the power distribution system, during an emergency power mode of the aircraft, in accordance with various aspects described herein.
FIG. 6 is a schematic illustration of another aspect of the power distribution system, during a charge mode of the aircraft, in accordance with various aspects described herein.
FIG. 7 is a schematic illustration of another aspect of the power distribution system, during a transient load mode of the aircraft, in accordance with various aspects described herein.
FIG. 8 is a flow diagram illustrating a method of operating a power distribution system of an aircraft, in in accordance with various aspects described herein.

### DETAILED DESCRIPTION

Aspects of the present disclosure are described herein in the context of an aircraft, which enables production of electrical power from an energy source such as a turbine engine, jet fuel, hydrogen, etc. However, it will be understood that the disclosure is not so limited and has general applicability to power distribution systems in non-aircraft applications, including other mobile applications and non-mobile industrial, commercial, and residential applications. For example, applicable mobile environments can include an aircraft, spacecraft, space-launch vehicle, satellite, locomotive, automobile, etc. Commercial environments can include manufacturing facilities or power generation and distribution facilities or infrastructure.

While "a set of" various elements will be described, it will be understood that "a set" can include any number of the respective elements, including only one element. The use of the terms "proximal" or "proximally" refers to moving in a direction toward another component, or a component being relatively closer to the other as compared to another reference point. Also as used herein, while sensors can be described as "sensing" or "measuring" a respective value, sensing or measuring can include determining a value indicative of or related to the respective value, rather than directly sensing or measuring the value itself. The sensed or measured values can further be provided to additional components. For instance, the value can be provided to a controller module or processor, and the controller module or processor can perform processing on the value to determine a representative value or an electrical characteristic representative of said value. Additionally, while terms such as "voltage", "current", and "power" can be used herein, it will be evident to one skilled in the art that these terms can be interrelated when describing aspects of the electrical circuit, or circuit operations.

Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to each other. In non-limiting examples, connections or disconnections can be selectively configured, connected, or connectable to provide, enable, disable, or the like, an electrical connection between respective elements. Non-limiting example power distribution bus connections or disconnections can be enabled or operated by way of switching, bus tie logic, or any other connectors configured to enable or disable the energizing of electrical loads downstream of the bus, or between buses.

As used herein, a "system" or a "controller module" can include at least one processor and memory. Non-limiting examples of the memory can include Random Access Memory (RAM), Read-Only Memory (ROM), flash memory, or one or more different types of portable electronic memory, such as discs, DVDs, CD-ROMs, etc., or any suitable combination of these types of memory. The processor can be configured to run any suitable programs or executable instructions designed to carry out various methods, functionality, processing tasks, calculations, or the like, to enable or achieve the technical operations or operations described herein. The program can include a computer program product that can include machine-readable media for carrying or having machine-executable instructions or data structures stored thereon. Such machine-readable media can be any available media, which can be accessed by a general purpose or special purpose computer or other machine with a processor. Generally, such a computer program can include routines, programs, objects, components, data structures, algorithms, etc., that have the technical effect of performing particular tasks or implement particular abstract data types.

As used herein, a bi-directional power converter is an electrical device or circuit that enables a bi-directional flow of energy between two different power sources, and is configured for bidirectional power conversion between AC and DC, DC and DC, or DC and AC.

As used herein, a controllable switching element, or a "switch" is an electrical device that can be controllable to toggle between a first mode of operation, wherein the switch is "closed" intending to transmit current from a switch input to a switch output, and a second mode of operation, wherein the switch is "open" intending to prevent current from transmitting between the switch input and switch output. In non-limiting examples, connections or disconnections, such as connections enabled or disabled by the controllable switching element, can be selectively configured to provide, enable, disable, or the like, an electrical connection between respective elements.

Aspects of the disclosure can be employed in any electrical circuit environment comprising a power source delivering power to a load. One non-limiting example of such an electrical circuit environment can be an aircraft power system or power distribution, which enables production of electrical power from at least one spool of a turbine engine, and delivers the electrical power through a power converter to a set of electrical loads. A typical power converter is a power supply or power processing circuit that converts an input voltage into a specified output voltage. A controller can be associated with the power converter to control an operation thereof by selectively controlling the conduction periods of switches employed therein. In some cases, an aircraft computer, which can include a FADEC, can control an operation of the power converter, for example based on a mode of operation of the aircraft and a set of sensed parameters and a set of predefined parameter values. The switches employed by the power converter are typically semiconductor switching devices (e.g., MOSFETs). Although various non-limiting aspects are depicted and described herein using various semiconductor switching devices such as MOSFETS, other aspects are not so limited. Other non-limiting aspects can include any desired switching device that can switch a state between a low resistance state and a high resistance state in response to an electrical signal. For example, the switching devices in various aspects can comprise, without limitation, any desired type of switching element including for example, transistors, gate commutated thyristors, field effect transistors (FETs), insulated-gate bipolar transistors (IGBT)s, MOSFETs, and the like.

The exemplary drawings are for purposes of illustration only and the dimensions, positions, order and relative sizes reflected in the drawings attached hereto can vary.

Conventional power distribution systems, for example for an aircraft, typically include a primary electrical power source (e.g., a generator) and can include one or more supplemental electrical power sources such as energy storage devices (e.g., a battery, a fuel cell, a capacitor, etc.). Typically, each supplemental power source is coupled to a respective power converter which is in turn coupled to a power bus of the aircraft. Each respective power converter is typically customized for operation with the power input device type, voltage input, and current input range. Additionally, each respective power converter is typically configured to provide power to a specific electrical load or load type (e.g., a lighting load, an actuator load, etc.). Such arrangements can be costly to implement, utilizing multiple power converters, can be complex to install, and/or can add significant amount of weight with each power converter.

Aspects as described herein can provide an improved solution that overcomes the above noted shortcomings of conventional arrangements. Aspects as disclosed herein can provide a single power converter coupleable to a set of at least two supplemental power sources, and can include bi-directional power transfer operation, including for example, bi-directional buck and boost voltage conversion. Aspects can include a single power converter electrically coupled to at least two supplemental power sources having adaptive controls configured to provide power, or receive power, based on an operating mode of the aircraft.

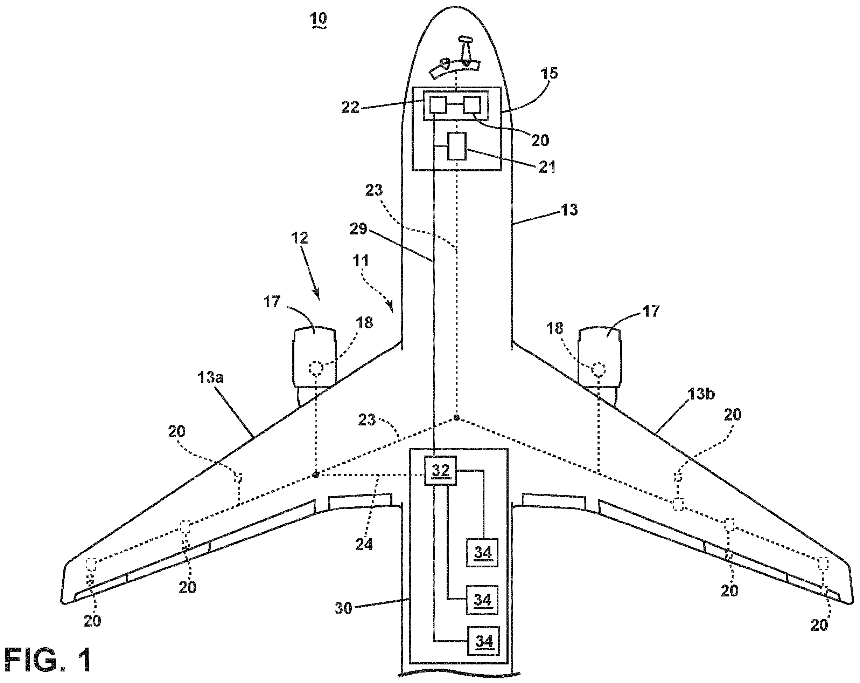

FIG. 1 depicts an aircraft 10 that provides an example of an environment for different aspects of the disclosure. The aircraft 10 can fly a route from one location to another (e.g., a flight). The aircraft 10 can include one or more propulsion systems 17 (e.g., a turbine engine) coupled to a fuselage 13. A cockpit 15 can be positioned in the fuselage 13. A left wing assembly 13a and a right wing assembly 13b can extend outwardly from the fuselage 13. The aircraft can include a power distribution system 11 for distributing power to a set of electrical loads 20. For example, in non-limiting aspects, the electrical loads can include, without limitation an engine starter, an electric actuator, lighting, emergency or essential equipment, constant power loads and the like. The electrical loads 20 can generally include any type of electrical load including constant-power loads, non-linear loads, high slew-rate loads, for example. The power distribution system 11 can include at least one electrical power generating source 12, and can include at least one of the propulsion systems 17. Alternatively, the power distribution system 11 can have fewer or additional electrical power generating sources 12 including only one. The power distribution system 11 can also include a supplemental electrical power system 30. The supplemental electrical power system 30 can include a bi-directional power converter 32 and a set of at least two supplemental electrical power sources 34.

Further, the aircraft 10 can include a controller or aircraft computer 22, and a set of aircraft systems 21 that enable proper operation of the aircraft 10. In non-limiting aspects the aircraft computer 22 can include or be communicatively coupled with a vehicle management computer (VMC) (not shown). The aircraft computer 22 can include also include a user interface or display (not shown). The display can be any user interface, screen, or known computer system or combination or computer systems that can communicate or otherwise provide an output to one or more users (e.g., a pilot) of the aircraft computer 22. In non-limiting aspects, the aircraft computer 22 can include a Flight Management System (not shown).

The set of aircraft systems 21 can reside within the cockpit 15, within the electronics and equipment bay (not shown), as well as in other locations throughout the aircraft 10. Such aircraft systems 21 can include but are not limited to the power distribution system 11, an electrical system, an oxygen system, hydraulics or pneumatics system, a fuel system, a propulsion system, flight management system (FMS), flight controls, audio/video systems, a data communications system, an Integrated Vehicle Health Management (IVHM) system, and systems associated with the mechanical structure of the aircraft 10, and combinations thereof.

The aircraft computer 22 can be communicatively coupled to the set of aircraft systems 21 including the power distribution system 11. It is contemplated that the aircraft computer 22 can aid in operating the set of aircraft systems 21 and can be communicatively coupled to and receive information from the set of aircraft systems 21 including the power distribution system 11. The aircraft computer 22 can be configured to control an operation of the power distribution system 11, for example based on predetermined parameters and a mode of operation of the aircraft 10. The aircraft computer 22 can also be connected with other controllers or computers (not shown) of the aircraft 10. Additionally, or alternatively, the aircraft computer 22 can be communicatively coupled with a remote server (not shown) or a designated ground station (not shown), or both. The ground station can be any type of communicating ground station such as one operated by an Air Navigation Service Provider (ANSP)/Air Traffic Control (ATC).

The aircraft computer 22 can include memory (not shown). The aircraft computer 22 memory can include Random Access Memory (RAM), Read-Only Memory (ROM), flash memory, or one or more different types of portable electronic memory, such as discs, DVDs, CD-ROMs, etc., or any suitable combination of these types of memory. The aircraft computer 22 can include one or more controller modules or processors (not shown), which can run any suitable programs. It will be understood that the aircraft computer 22 can include or be associated with any suitable number of individual microprocessors, power supplies, storage devices, interface cards, auto flight systems, flight management computers, controller modules, and other standard components and that the aircraft computer 22 can include or cooperate with machine executable code, any number of software (also sometimes called "firmware") programs (e.g., flight management programs), or other instructions designed to carry out the various methods, process tasks, calculations, and control/display functions necessary for operation of the aircraft 10. In non-limiting aspects, the aircraft computer 22 can comprise a Flight Management System (not shown). While not illustrated, it will be understood that any number of sensors or other systems can also be communicatively or operably coupled to the aircraft computer 22 to provide information thereto or receive information therefrom.

The supplemental electrical power system 30 is communicatively coupled to the aircraft computer 22, or VMC, via a first data communication line 29, and selectively electrically connectable with the primary power bus 23, via a secondary power bus 24. The supplemental electrical power sources 34 can be electrical power storage devices. For example, in non-limiting aspects, the supplemental electrical power sources 34 can include, but are not limited to, fuel cells, batteries, capacitors, supercapacitors, or any other source of electrical power.

The propulsion systems 17 can be substantially identical, and can further include a respective power source, illustrated by way of a non-limiting example as a respective starter/generator 18. In other non-limiting aspects, the power source can be a generator. At least one of the respective starter/generators 18 can include a variable speed or variable output starter/generator 18. In this example, a variable speed or variable output starter/generator 18 can include a starter/generator 18 adapted or configured to operate within a predetermined range of input speed, gearbox speed ratios, or the like, and can generate a power output within a predetermined output range (e.g. voltage output range, current output range, frequency output range, or a combination thereof). The starter/generator 18 operation can be controlled in a known manner, by the aircraft computer 22, or VMC, for example based on a mode of operation of the aircraft and/or a set of sensed parameters and a set of predefined parameter values. In one non-limiting example, a variable output starter/generator 18 can include a generator adapted or configured to output approximately 270 Volts DC between 390 and 410 Hertz.

The set of electrical loads 20, can include electrical power consuming components, such as for instance, an actuator load, flight critical loads, and non-flight critical loads. The set of electrical loads 20 are electrically coupled with at least one of the starter/generators 18, via a primary power bus 23, such as, for instance, power transmission lines, bus bars, power buses (or the like).

Non-limiting aspects of the disclosure can be included wherein, for example, at least one propulsion system 17 includes a respective starter/generator 18 as a primary power source and the supplemental electrical power system 30 including the at least two supplemental electrical power sources 34 as a secondary, back-up, auxiliary, boost, or redundant power source.

As will be discussed in more detail herein, in operation, under certain conditions, the set of at least two supplemental electrical power sources 34 can be selectively electrically coupled with the primary power bus 23, via the bi-directional power converter 32 and the secondary power bus 24, to provide primary or supplemental electrical power to at least a subset of the electrical loads 20. Additionally, or alternatively, under certain other conditions, the set of at least two supplemental electrical power sources 34 can be selectively connected with the primary power bus 23 via the bi-directional power converter 32 and the secondary power bus 24, to receive power from the at least one electrical power generating source 12. In this way, as will be discussed in more detail herein, the bi-directional power converter 32 can selectively operate in a charge mode, or a discharge mode, or both.

For example, in operation, the propulsion systems 17 can provide mechanical energy which can be extracted, (e.g., via a spool), to provide a driving force for the respective starter/generator 18. The respective starter/generator 18 in turn, generates power, such as AC or DC power, and provides the generated power to the primary power bus 23, which delivers the power to the set of electrical loads 20, positioned throughout the aircraft 10.

However, in certain instances, for example, when the at least one electrical power generating source 12 cannot provide sufficient power or otherwise meet a power demand to the set of electrical loads 20 (e.g., a power deficit), the supplemental electrical power system 30 can operate in the discharge mode wherein at least one of the at least two supplemental electrical power sources 34 is operable to selectively provide at least a portion of the power demand to the set of electrical loads 20 via the secondary power bus 24. In non-limiting aspects, the power demand can include primary power, supplemental electrical power, redundant power, backup power, emergency power, or the like. By way of another example, in certain other instances, at least one of the at least two supplemental electrical power sources 34 (e.g. a battery) can be in an at least partially discharged state, and the at least one electrical power generating source 12 can provide sufficient power to meet the power demand of the set of electrical loads 20, (e.g., a power balance), then the supplemental electrical power system 30 can operate in the charge mode wherein the at least one the at least two supplemental electrical power sources 34 can selectively electrically coupled to the secondary power bus 24 to receive electrical power from the at least one electrical power generating source 12.

It will be understood that while aspects of the disclosure are shown in an aircraft environment of FIG. 1, the disclosure is not so limited and can have applicability in a variety of environments. For example, while this description is directed toward a power distribution system in an aircraft, aspects of the disclosure can be further applicable to provide power, supplemental electrical power, emergency power, essential power, or the like.

Furthermore, the number of, and placement of, the various components depicted in FIG. 1 are also non-limiting examples of aspects associated with the disclosure. For example, while various components have been illustrated with relative position of the aircraft 10 (e.g. the electrical loads 20 on the wings of the aircraft 10, etc.), aspects of the disclosure are not so limited, and the components are not so limited based on their schematic depictions. Additional aircraft 10 configurations are envisioned.

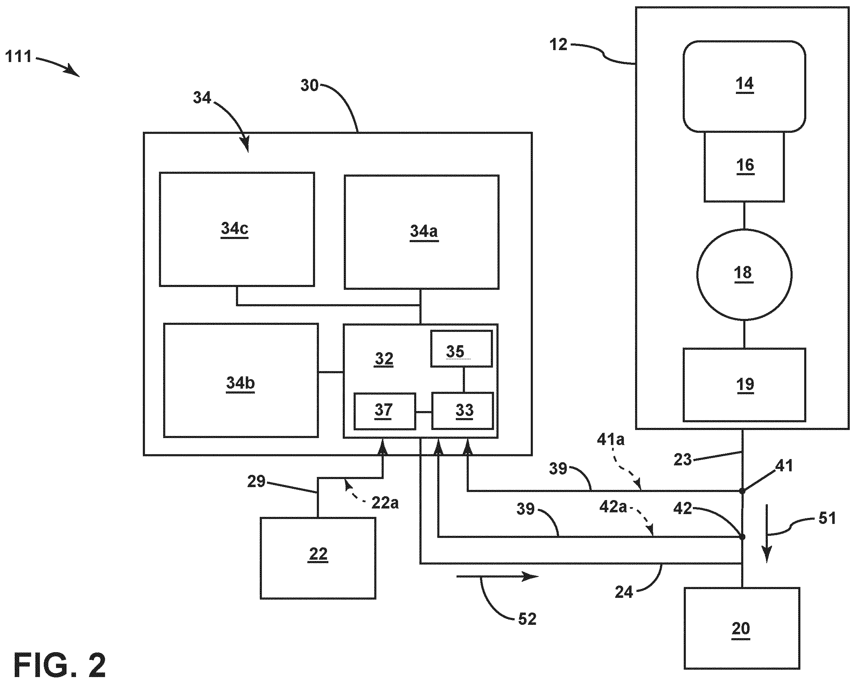

Referring now to FIG. 2, a more detailed schematic block diagram of an exemplary power distribution system 111 that can be utilized in the aircraft 10 of FIG. 1 is shown. The power distribution system 111 can include the at least one electrical power generating source 12, and the supplemental electrical power system 30. The at least one electrical power generating source 12 is electrically coupled to the set of electrical loads 20 via the primary power bus 23 to provide electrical power thereto. The supplemental electrical power system 30 is electrically coupled to the primary power bus 23 downstream of the at least one electrical power generating source 12 via the secondary power bus 24.

In non-limiting aspects, the electrical power generating source 12 can include the starter/generator 18 (e.g. an engine starter/generator) such as an AC generator, rotatably coupled to a prime mover or engine 14 (e.g., a turbine engine). In some non-limiting aspects, the starter/generator 18 can be rotatably coupled to the engine 14 via an accessory drive 16, such as an accessory gear box. The electrical power generating source 12 can further include a power converter 19 such as a rectifier or an AC-DC power converter. In non-limiting aspects, the power converter 19 can be a bi-directional AC-DC power converter. The power converter 19 can be electrically coupled to the primary power bus 23. The power converter 19 can be configured or adapted to convert or rectify the electrical power characteristics of electrical power supplied from the starter/generator 18 to another, a different, an alternative, or an appropriate electrical power characteristic for the set of electrical loads 20. In non-limiting examples, the power converter 19 can provide voltage step-up or step-down power conversion, DC to AC power conversion, AC to DC power conversion, or AC to AC power conversion involving changes in frequency or phase.

While FIG. 2 depicts one instance of an electrical power generating source 12, it is contemplated that the electrical power generating source 12 can include any number of other power generating arrangements, without departing from the scope of the disclosure. For example, in another non-limiting instance, while not shown, the electrical power generating source 12 can include a DC power source (e.g., a battery, a rectifier, or the like), an exciter, and a rectifier. The DC power source can be electrically coupled to the exciter to provide a DC input voltage thereto. The exciter can be electrically coupled to the generator to provide a field current to a rotor winding of the generator. A generator driver can be coupled to the generator to drive the generator to thereby produce an AC voltage at an output of the generator. The AC voltage can then be rectified using the rectifier. Furthermore, while the power distribution system 111 of FIG. 2 is shown having a single starter/generator 18, aspects of the disclosure can include any number of starter/generators 18 or electrical power generating sources 12, as desired. Regardless of the specific power generating arrangement, the electrical power generating source 12 can be electrically coupled to the primary power bus 23, for example, to provide a first current (depicted as arrow "51") thereto.

The at least two supplemental electrical power sources 34 are depicted in FIG. 2 as a first supplemental electrical power source 34a, (for example, a battery) a second supplemental electrical power source 34b (for example, a fuel cell), and a third supplemental electrical power source 34c (for example, a capacitor). In non-limiting aspects, the first supplemental electrical power source 34a, the second supplemental electrical power source 34b, or the third supplemental electrical power source 34c can be DC electrical power storage devices. For example, in non-limiting aspects, the first supplemental electrical power source 34a, the second supplemental electrical power source 34b, or the third supplemental electrical power source 34c can include, without limitation, a respective dischargeable DC power storage device, such as a battery, a battery bank, a battery cell, a super capacitor, a fuel cell, a hydrogen cell, or a continuously or semi-continuous power conversion or supplying device, such as a solar cell, a wind turbine, or the like, and combinations thereof. It is contemplated that in some non-limiting aspects, the first supplemental electrical power source 34a, the second supplemental electrical power source 34b, or the third supplemental electrical power source 34c can further include associated circuitry, such as switching modules, to enable an AC voltage output of the DC power storage device. It is contemplated that while exemplary aspects are described herein for brevity of description and ease of understanding, using various examples in which the first supplemental electrical power source 34a can be a battery, the second supplemental electrical power source 34b can be a fuel cell, and the third supplemental electrical power source 34c can be a capacitor, other aspects are not so limited, and the first, second, and third supplemental power sources 34a, 34b, 34c can each be any desired dischargeable DC power storage device, in various combinations, without limitation. Regardless of the specific dischargeable supplemental electrical power sources 34, the supplemental electrical power system 30 is electrically coupled to the secondary power bus 24 to provide a second current (depicted as arrow "52") thereto.

The bi-directional power converter 32 can include a controller module 33, a memory 35, and a switching portion 37. The bi-directional power converter 32 is communicatively coupled to the aircraft computer 22 via the first data communication line 29. The bi-directional power converter 32 is electrically coupled to the secondary power bus 24 downstream of the electrical power generating source 12, and upstream of the set of electrical loads 20.

The memory 35 can include Random Access Memory (RAM), Read-Only Memory (ROM), flash memory, or one or more different types of portable electronic memory, such as discs, DVDs, CD-ROMs, etc., or any suitable combination of these types of memory. The controller module 33, can be configured to run any suitable software programs. It will be understood that the controller module 33 can include or be associated with any suitable number of individual microprocessors, power supplies, storage devices, interface cards, controller modules, and other standard components and that the controller module 33 can include or cooperate with machine executable code, any number of software (also sometimes called "firmware") programs, or other instructions designed to carry out the various methods, process tasks, calculations, and control/display functions necessary for operation of the bi-directional power converter 32.

The switching portion 37 can include any number of switching devices, such as contactors, relays, solid-state or semiconductive switches and the like, communicatively coupled to the controller module 33, and configured to selectively enable and disable an electrical connection of the at least two supplemental electrical power sources 34 to the secondary power bus 24. For example, a respective switching device (not shown) can be electrically coupled between each supplemental electrical power source 34 and the secondary power bus 24 to selectively electrically couple the respective supplemental electrical power source 34 to the secondary power bus 24. Additionally, in non-limiting aspects, the switching portion 37 can further include a buck circuit, boost circuit, or both (not shown) electrically coupleable to one or more of the at least two supplemental electrical power sources 34 and the secondary power bus 24. For example, in one non-limiting instance, the switching portion 37 can include a buck-boost DC-DC converter, such as a bi-directional buck-boost converter.

A set of sensors can be communicatively coupled with the bi-directional power converter 32 via a respective second data communication line 39. In non-limiting aspects, the set of sensors can include a first sensor 41 and a second sensor 42. Non-limiting examples of the set of sensors 41, 42 can include a current sensor, a voltage sensor, or the like, arranged, adapted, or otherwise configured in various combinations to sense or measure a respective predetermined parameter such as an amount of power, voltage, current, or combinations thereof. The set of sensors 41, 42 can be communicatively coupled to the bi-directional power converter 32 to provide a respective first sensor signal 41a, and second sensor signal 42a indicative of a value of the respective sensed parameter to the bi-directional power converter 32. The second data communication lines 39 can be wired or wireless communication lines. For example, as illustrated, in non-limiting aspects, the first sensor 41 can comprise a voltage sensor arranged to sense a voltage on the primary power bus 23 and the second sensor 42 can comprise a current sensor arranged to sense a current in the primary power bus 23.

The controller module 33 or the memory 35, or both, can be communicatively coupled with the set of sensors 41, 42. In this sense, the set of sensors 41, 42 can provide, or the bi-directional power converter 32 can obtain, a respective sensor signal 41a, 42a indicative of the sensed parameters. For example, in non-limiting aspects, the bi-directional power converter 32 can receive, via a respective data communication line 29, 39, one or more of a first sensor signal 41a indicative of a value of a first voltage on the primary power bus 23, a second sensor signal 42a indicative of a value of the first current 51. In other aspects, any number of sensors 41, 42 can be used to sense any desired predetermined parameter or value such as, without limitation, an amount of power, voltage, current, frequency, or combinations thereof and to provide a corresponding first sensor signal 41a, and second sensor signal 42a indicative of the respective sensed parameter to bi-directional power converter 32.

In one non-limiting aspect, the bi-directional power converter 32 can optionally be further communicatively coupled with another power or system controller (not shown) instead of, or in addition to the aircraft computer 22. In one non-limiting example, the aircraft computer 22 can be adapted, enabled, or otherwise configured to controllably operate the bi-directional power converter 32 or aspects of the supplemental electrical power system 30. For instance, the aircraft computer 22 can provide an input signal 22a to the bi-directional power converter 32. In non-limiting aspects, the input signal 22a can be indicative of additional information of operational characteristic values pertinent to the supplemental electrical power system 30, electrical power generating source 12, the set of electrical loads 20, the operating mode of the power distribution system 111, the operating mode of the aircraft 10, or combinations thereof. For instance, in the non-limiting example of an aircraft environment, the aircraft computer 22 can provide via the input signal 22a information indicative of operational characteristic values related to the flight phase or other operating characteristics of the aircraft 10, or an operating mode of the at least one electrical power generating source 12, a status of the set of electrical loads 20 or combinations thereof. In other non-limiting aspects, the input signal 22a can include a command signal indicative of a desired mode of operation of the supplemental electrical power system 30.

The controller module 33 can be communicatively coupled to at least one supplemental electrical power source 34a, 34b, 34c of the set of at least two supplemental electrical power sources 34. For example, in non-limiting aspects, the controller module can be configured to determine a status of the at least one supplemental electrical power source 34a, 34b, 34c of the set of at least two supplemental electrical power sources 34. In non-limiting aspects, the status can include a state of charge or an amount of stored energy or the respective the at least one supplemental electrical power source 34a, 34b, 34c of the set of at least two supplemental electrical power sources 34.

The controller module 33 can be configured to control operation of the operation of the bi-directional power converter 32 based on based at least in part on the first sensor signal 41a, second sensor signal 42a, the input signal 22a, or combinations thereof. For example, in one non-limiting aspect, the controller module 33 can be configured to control an operation of the switching portion 37 based on the measured value the first voltage on the primary power bus 23, the measured value of the first current 51, an operating mode of the electrical power generating source 12, an operating mode of the aircraft 10, a status (e.g., a state of charge) of at least one supplemental electrical power source 34a, 34b, 34c of the set of at least two supplemental electrical power sources 34, and combinations thereof.

In operation, the bi-directional power converter 32 can selectively operate in a charge mode, a discharge mode, or both. In non-limiting aspects, when the bi-directional power converter 32 is operating in the discharge mode, the second current 52 will flow from the supplemental electrical power system 30 in the secondary power bus 24 toward the primary power bus 23. Conversely, in non-limiting aspects, when the bi-directional power converter 32 is operating in the charge mode, the first current 51 or a portion thereof, will flow from the primary power bus 23 to the secondary power bus 24 toward the supplemental electrical power system 30.

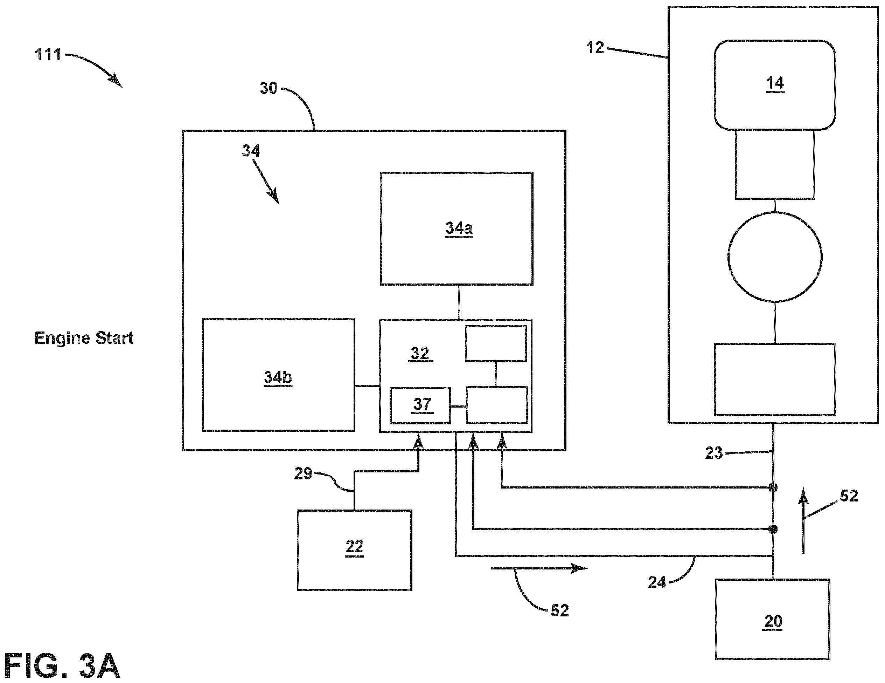

FIG. 3A is a schematic block diagram illustrating another aspect of the power distribution system 111, during an engine start mode of the aircraft 10. The aspect of FIG. 3A is similar to the aspect of FIG. 2, so like parts are labelled with like reference numbers. One notable non-limiting difference between the aspect depicted in FIG. 2, and the aspect of FIG. 3A is that the supplemental electrical power system 30 of FIG. 3A has only two supplemental electrical power sources, specifically, the first supplemental electrical power source 34a, and the second supplemental electrical power source 34b. It is contemplated that aspects are not limited to the first supplemental electrical power source 34a and second supplemental electrical power source 34b, and other aspects can include the third supplemental electrical power sources 34c (e.g., a capacitor), and/or additional supplemental electrical power sources 34, without departing from the scope of the disclosure. Another notable difference between the aspect depicted in FIG. 2, and the aspect of FIG. 3A is that in the example instance of FIG. 3A, the first current 51 is not shown, and the second current 52 is not provided to the set of electrical loads 20, but is instead provided to the electrical power generating source 12.

As depicted in FIG. 3A, the aircraft can be operating in a start mode, in which the electrical power generating source 12 is controlled, commanded or otherwise operated by the aircraft computer 22 to start the engine 14. In such an instance, the supplemental electrical power system 30 can receive the input signal 22a from the aircraft computer 22 via a first data communication line 29 indicating the aircraft 10 is operating in a start mode. Based on the input signal 22a, the bi-directional power converter 32 is configured to control the operation of the switching portion 37 to selectively electrically couple the first supplemental electrical power source 34a, or the second supplemental electrical power source 34b, or both, to the secondary power bus 24 to provide the electrical power thereto. In non-limiting aspects, controller module 33 can be configured to select at least one supplemental electrical power source 34a, 34b to be selectively coupled to the secondary power bus 24. For example, the selection of the at least one supplemental electrical power source 34a, 34b can be based on a status (e.g. a state of charge) of the first supplemental electrical power source 34a, or the second supplemental electrical power source 34b, or both.

In non-limiting aspects, the bi-directional power converter 32 can control the operation of the switching portion 37 to selectively electrically couple the second supplemental electrical power source 34b and the first supplemental electrical power source 34a, either sequentially or simultaneously, or a combination thereof, to the secondary power bus 24 to provide the second current 52 thereto. The selective electrical coupling of the second supplemental electrical power source 34b or the first supplemental electrical power source 34a can be further based at least in part on the first sensor signal 41a, second sensor signal 42a, the input signal 22a, an operating mode of the electrical power generating source 12, a status (e.g., a state of charge) of at least one supplemental electrical power source 34a, 34b, 34c of the set of at least two supplemental electrical power sources 34, and combinations thereof.

For example, in operation during an engine start mode, the bi-directional power converter 32 can control the operation of the switching portion 37 to selectively electrically couple the second supplemental electrical power source 34b to the secondary power bus 24 to provide the second current 52 thereto. The bi-directional power converter 32 can keep the second supplemental electrical power source 34b coupled to the secondary power bus 24 for a predetermined period of time, or until the stored energy level or state of charge of the second supplemental electrical power source 34b reaches a predetermined level, or until the aircraft computer 22 provides the input signal 22a indicative that the engine 14 has started (e.g., an engine light-off). Additionally, or alternatively, in such an instance wherein the bi-directional power converter 32 controls the switching portion 37 to selectively electrically decouple the second supplemental electrical power source 34b from the secondary power bus 24 prior to an engine 14 start (e.g., engine light-off), for example after a predetermined period of time, the bi-directional power converter 32 can then control the operation of the switching portion 37 to selectively electrically couple the first supplemental electrical power source 34a to the secondary power bus 24 to provide the second current 52 thereto. The bi-directional power converter 32 can keep the first supplemental electrical power source 34a coupled to the secondary power bus 24 for a predetermined period of time, or until the stored energy level or state of charge of the first supplemental electrical power source 34a reaches a predetermined level, or until the aircraft computer 22 provides the input signal 22a indicative that the engine 14 has started (e.g., engine light-off).

In still other non-limiting aspects, the bi-directional power converter 32 can control the operation of the switching portion 37 to selectively electrically couple both the second supplemental electrical power source 34b and the first supplemental electrical power source 34a to the secondary power bus 24 to cooperatively provide the second current 52 thereto. The bi-directional power converter 32 can keep the second supplemental electrical power source 34b and the first supplemental electrical power source 34a coupled to the secondary power bus 24 for a predetermined period of time, or until the stored energy level or state of charge of the second supplemental electrical power source 34b or the first supplemental electrical power source 34a reaches a predetermined level, or until the aircraft computer 22 provides the input signal 22a indicative that the engine 14 has started (e.g., an engine light-off).

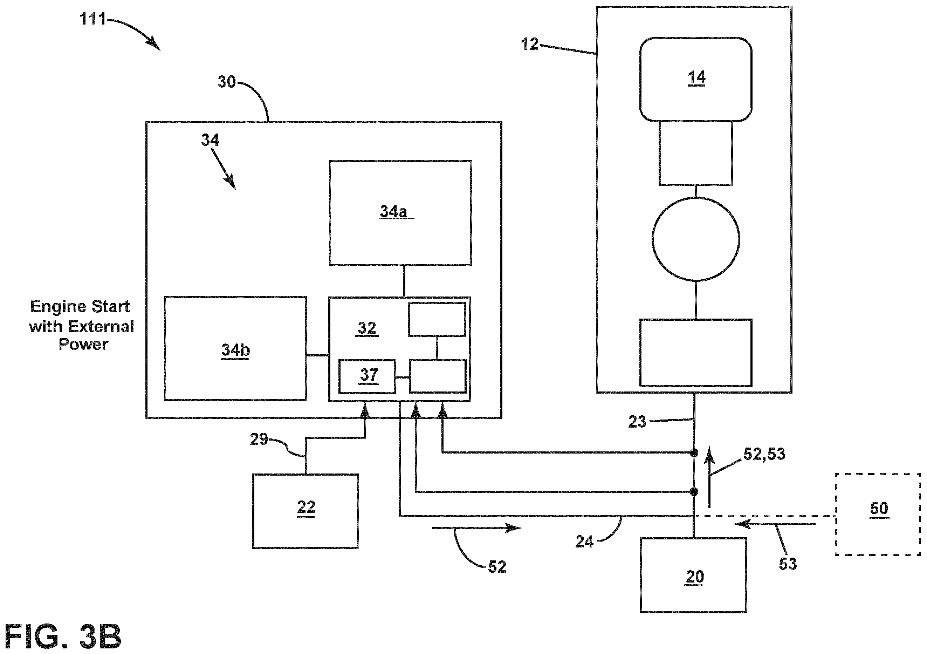

FIG. 3B is a schematic block diagram illustrating another aspect of the power distribution system 111, during an engine start mode of the aircraft 10. The aspect of FIG. 3B is similar to the aspect of FIG. 3A, so like parts are labelled with like reference numbers. One notable non-limiting difference between the aspect depicted in FIG. 3A, and the aspect of FIG. 3B is that the power distribution system 111 of FIG. 3B includes an external electrical power source 50 (e.g., a secondary battery) electrically coupled to the primary power bus 23 to provide a third current 53, thereto.

In operation, the example aspect of FIG. 3B operates similarly to the aspect of FIG. 3A, however, in the aspect of FIG. 3B both the second current 52 and the third current 53 are both provided (e.g. as a sum of the second current 52 and the third current 53) to the electrical power generating source 12 via the primary power bus 23. Once the engine 14 of the aircraft is started (e.g., an engine light-off), the aircraft computer 22 can provide the input signal 22a indicative of the engine start-up, and termination of the engine start mode.

In other aspects, the supplemental electrical power system 30 can also be configured to provide supplemental electrical power to the electrical power generating source 12 or the set of electrical loads 20, or both. For example, in some instances, the engine 14 of the aircraft 10 can be a hybrid-electric type engine, and the aircraft 10 can be operate in an engine core assist mode, in which the supplemental electrical power system 30 is configured to provide electrical power to both the electrical power generating source 12 and the set of electrical loads 20.

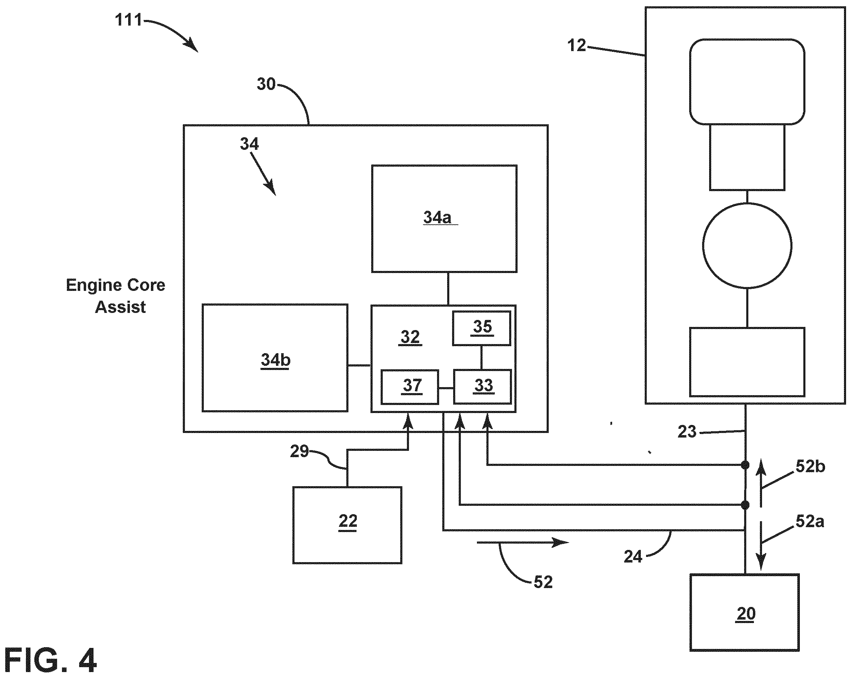

FIG. 4 is a schematic block diagram illustrating another aspect of the power distribution system 111, for example, during an engine core assist mode of the aircraft 10. The aspect of FIG. 4 is similar to the aspect of FIG. 2, so like parts are labelled with like reference numbers. One notable non-limiting difference between the aspect depicted in FIG. 2, and the aspect of FIG. 4 is that the supplemental electrical power system 30 of FIG. 4 has only two supplemental electrical power sources, specifically a first supplemental electrical power source 34a, and a second supplemental electrical power source 34b. It is contemplated that aspects are not limited to the first supplemental electrical power source 34a and second supplemental electrical power source 34b, and other aspects can include the third supplemental electrical power sources 34c (e.g., a capacitor), and/or additional supplemental electrical power sources 34, without departing from the scope of the disclosure. Another notable difference between the aspect depicted in FIG. 2, and the aspect of FIG. 4 is that in the example instance of FIG. 4, the first current 51 is not shown, and the second current 52 is split into a first engine portion 52a provided to the electrical power generating source 12 via the primary power bus 23 in a first direction, and a second load portion 52b provided to the set of electrical loads 20 in a second direction.

As depicted in FIG. 4, the aircraft can be operating in the engine core assist mode, and the supplemental electrical power system 30 can be configured to receive the input signal 22a from the aircraft computer 22 indicating the aircraft 10 is in the engine core assist mode. Based on the input signal 22a, the bi-directional power converter 32 can be configured to control the operation of the switching portion 37 to selectively electrically couple the first supplemental electrical power source 34a, or the second supplemental electrical power source 34b, or both, to the secondary power bus 24 to provide electrical power thereto. In non-limiting aspects, the input signal 22a can be further indicative of a predetermined magnitude of a voltage or current, or both, of the first engine portion 52a. For example, the predetermined magnitude of the voltage or current, or both, of the first engine portion 52a can be based on, without limitation, a respective power rating of one or more components of the electrical power generating source 12, an electrical load demand on the electrical power generating source 12, a flight phase of the aircraft 10, or combinations thereof. In non-limiting aspects, the respective magnitude, of the predetermined voltage or current, or both, of the first engine portion 52a can be selected by the controller module 33 from the memory 35. In non-limiting aspects, controller module 33 can be further configured to select at least one supplemental electrical power source 34a, 34b to be selectively coupled to the secondary power bus 24. For example, the selection of the at least one supplemental electrical power source 34a, 34b can be based on a status (e.g. a state of charge) of the first supplemental electrical power source 34a, or the second supplemental electrical power source 34b, or both.

Additionally, in non-limiting aspects, the bi-directional power converter 32 can control the operation of the switching portion 37 to selectively electrically couple the second supplemental electrical power source 34b and the first supplemental electrical power source 34a, either sequentially or simultaneously, or a combination thereof, to the secondary power bus 24 to provide the second load portion 52b of the second current 52 thereto. For example, a magnitude of the second load portion 52b of the second current 52 can be based on a cumulative electrical load demand of the set of electrical loads 20. The selective electrical coupling of the second supplemental electrical power source 34b or the first supplemental electrical power source 34a can be further based at least in part on the first sensor signal 41a, second sensor signal 42a, the input signal 22a, an operating mode of the electrical power generating source 12, an operating mode of the aircraft 10, a status (e.g., a state of charge) of at least one supplemental electrical power source 34a, 34b, 34c of the set of at least two supplemental electrical power sources 34, and combinations thereof.

For example, in operation, the supplemental electrical power system 30 can receive the input signal 22a from the aircraft computer 22 indicating the aircraft 10 is in the engine core assist mode. Based on the input signal 22a, the bi-directional power converter 32 can control the operation of the switching portion 37 to selectively electrically couple the second supplemental electrical power source 34b to the secondary power bus 24 to provide the second current 52 thereto. The bi-directional power converter 32 can keep the second supplemental electrical power source 34b coupled to the secondary power bus 24 for a predetermined period of time, or until the stored energy level or state of charge of the second supplemental electrical power source 34b reaches a predetermined level, or until the aircraft computer 22 provides the input signal 22a indicative that the aircraft 10 is no longer in the engine core assist mode. Additionally, or alternatively, in such an instance wherein the bi-directional power converter 32 controls the switching portion 37 to selectively electrically decouple the second supplemental electrical power source 34b from the secondary power bus 24 prior to receiving the input signal 22a indicative that the aircraft 10 is no longer operating in the engine core assist mode, the bi-directional power converter 32 can then control the operation of the switching portion 37 to selectively electrically couple the first supplemental electrical power source 34a to the secondary power bus 24 to provide the second current 52 thereto. The bi-directional power converter 32 can keep the first supplemental electrical power source 34a coupled to the secondary power bus 24 for a predetermined period of time, or until the stored energy level or state of charge of the first supplemental electrical power source 34a reaches a predetermined level, or until the aircraft computer 22 provides the input signal 22a indicative that the aircraft 10 is no longer operating in the engine core assist mode.

It is also contemplated that the aircraft 10 can be operating in an emergency power mode. For example, in operation, the aircraft 10 may lose power. For instance, the electrical power generating source 12 can suffer a breakdown or other malfunction causing it to cease providing electrical power to the set of electrical loads 20. In such an instance, the aircraft computer 22 can, in which the supplemental electrical power system 30 is configured to provide electrical power to both the electrical power generating source 12 and the set of electrical loads 20.

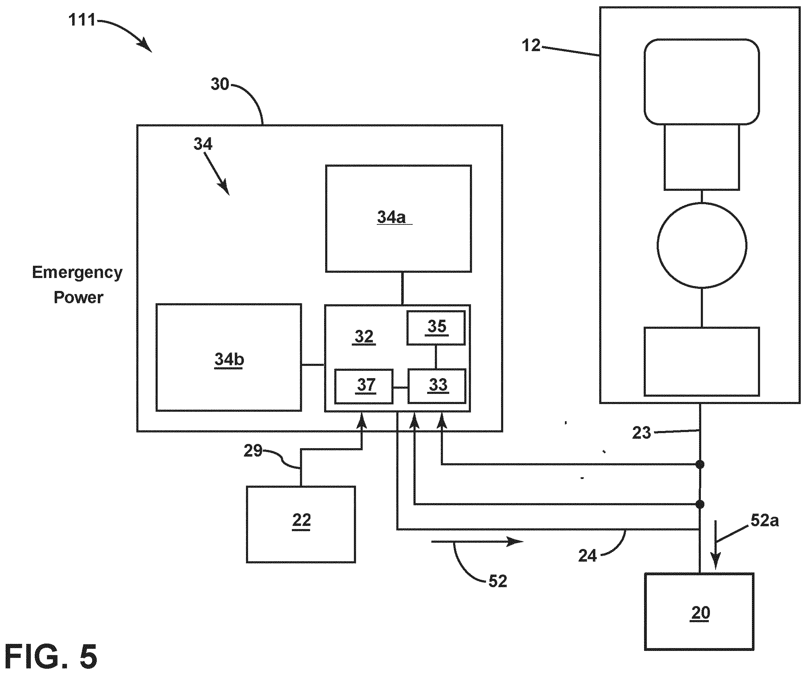

FIG. 5 is a schematic block diagram illustrating another aspect of the power distribution system 111, for example, during an emergency power mode of the aircraft 10. The emergency power mode can occur during a flight of the aircraft 10 or during a ground operation. The aspect of FIG. 5 is similar to the aspect of FIG. 2, so like parts are labelled with like reference numbers. One notable non-limiting difference between the aspect depicted in FIG. 2, and the aspect of FIG. 5 is that the supplemental electrical power system 30 of FIG. 4 has only two supplemental electrical power sources, specifically a first supplemental electrical power source 34a, and a second supplemental electrical power source 34b. It is contemplated that aspects are not limited to the first supplemental electrical power source 34a and second supplemental electrical power source 34b, and other aspects can include the third supplemental electrical power source 34c (e.g., a capacitor), and/or additional supplemental electrical power sources 34, without departing from the scope of the disclosure. Another notable difference between the aspect depicted in FIG. 2, and the aspect of FIG. 5 is that in the example instance of FIG. 5, the first current 51 is not present, and only the second current 52 is provided to the set of electrical loads 20 via the secondary power bus 24 via the primary power bus 23.

As depicted in FIG. 5, the aircraft can be operating in the emergency power mode, and the supplemental electrical power system 30 can be configured to receive the input signal 22a from the aircraft computer 22 indicating the aircraft 10 is in the emergency power mode. Based on the input signal 22a, the bi-directional power converter 32 can be configured to control the operation of the switching portion 37 to selectively electrically couple the first supplemental electrical power source 34a, or the second supplemental electrical power source 34b, or both, to the secondary power bus 24 to provide electrical power thereto. In non-limiting aspects, controller module 33 can be configured to select at least one supplemental electrical power source 34a, 34b to be selectively coupled to the secondary power bus 24. For example, the selection of the at least one supplemental electrical power source 34a, 34b can be based on a status (e.g. a state of charge) of the first supplemental electrical power source 34a, or the second supplemental electrical power source 34b, or both.

The selective electrical coupling of the second supplemental electrical power source 34b or the first supplemental electrical power source 34a can be further based at least in part on the first sensor signal 41a, second sensor signal 42a, the input signal 22a, an operating mode of the electrical power generating source 12, an operating mode of the aircraft 10, a status (e.g., a state of charge) of at least one supplemental electrical power source 34a, 34b, 34c of the set of at least two supplemental electrical power sources 34, and combinations thereof.

In non-limiting aspects, the input signal 22a can be further indicative of a predetermined or desired magnitude of a voltage or current, or both, associated with the second current 52. For example, the predetermined magnitude of the voltage or current, or both, associated the second current 52 can be based on, without limitation, a load demand for electrical loads deemed essential loads or flight-critical loads or the like. **In** non-limiting aspects, the respective magnitude, of the predetermined voltage or current, or both, associated with the second current 52 can be selected by the controller module 33 from the memory 35. Additionally, in non-limiting aspects, the bi-directional power converter 32 can control the operation of the switching portion 37 to selectively electrically couple the second supplemental electrical power source 34b and the first supplemental electrical power source 34a, either sequentially or simultaneously, or a combination thereof, to the secondary power bus 24 to provide the second current 52 thereto. For example, a magnitude of the second current 52 can be based on a predetermined electrical load demand of the set of electrical loads 20 or a subset thereof.

For example, in operation, the supplemental electrical power system 30 can receive the input signal 22a from the aircraft computer 22 indicating the aircraft 10 is in the emergency power mode. Based on the input signal 22a, the bi-directional power converter 32 can control the operation of the switching portion 37 to selectively electrically couple the second supplemental electrical power source 34b to the secondary power bus 24 to provide the second current 52 thereto. The bi-directional power converter 32 can keep the second supplemental electrical power source 34b coupled to the secondary power bus 24 for a predetermined period of time, or until the stored energy level or state of charge of the second supplemental electrical power source 34b reaches a predetermined level, or until the aircraft computer 22 provides the input signal 22a indicative that the aircraft 10 is no longer in the emergency power mode. Additionally, or alternatively, in such an instance wherein the bi-directional power converter 32 controls the switching portion 37 to selectively electrically decouple the second supplemental electrical power source 34b from the secondary power bus 24 prior to receiving the input signal 22a indicative that the aircraft 10 is no longer operating in the emergency mode, the bi-directional power converter 32 can then control the operation of the switching portion 37 to selectively electrically couple the first supplemental electrical power source 34a to the secondary power bus 24 to provide the second current 52 thereto. The bi-directional power converter 32 can keep the first supplemental electrical power source 34a coupled to the secondary power bus 24 for a predetermined period of time, or until the stored energy level or state of charge of the first supplemental electrical power source 34a reaches a predetermined level, or until the aircraft computer 22 provides the input signal 22a indicative that the aircraft 10 is no longer operating in the emergency power mode.

It is also contemplated that the aircraft 10 can be operating in a battery standby or charge mode. For example, in operation, electrical power generating source 12 may be operating to provide the first current 51 to the set of electrical loads, without need for emergency, auxiliary or supplemental electrical power from the supplemental electrical power system 30. In such an instance, the electrical power generating source 12 can further provide a portion of the first current 51 to the supplemental electrical power system 30 for example as a charging current.

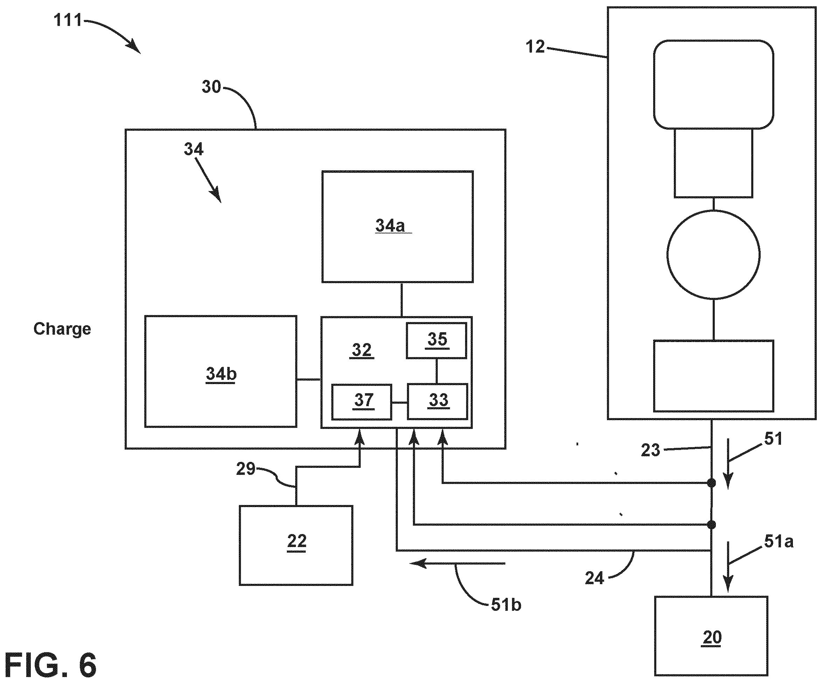

FIG. 6 is a schematic block diagram illustrating another aspect of the power distribution system 111, for example, during a standby or charge mode of the aircraft 10. The battery standby or charge mode can occur during a flight of the aircraft 10 or during a ground operation. The aspect of FIG. 6 is similar to the aspect of FIG. 2, so like parts are labelled with like reference numbers. One notable non-limiting difference between the aspect depicted in FIG. 2, and the aspect of FIG. 6 is that the supplemental electrical power system 30 of FIG. 6 has only two supplemental electrical power sources, specifically the first supplemental electrical power source 34a, and the second supplemental electrical power source 34b. It is contemplated that aspects are not limited to the first supplemental electrical power source 34a and the second supplemental electrical power source 34b, and other aspects can include the third supplemental electrical power source 34c (e.g., a fuel cell), and/or additional supplemental electrical power sources 34, without departing from the scope of the disclosure. Another notable difference between the aspect depicted in FIG. 2, and the aspect of FIG. 6 is that in the example instance of FIG. 6, the second current 52 is not shown, and only the first current 51 is split between a load portion 51a provided to the set of electrical loads 20 via the primary power bus 23, and a charging portion 51b provided to the supplemental electrical power system 30 via the secondary power bus 24 via primary power bus 23.

As depicted in FIG. 6, the aircraft 10 can be operating in the battery charge mode, and the supplemental electrical power system 30 can be configured to receive the input signal 22a from the aircraft computer 22 indicating the aircraft 10 is operating in the charge mode. Based on the input signal 22a, the bi-directional power converter 32 can be configured to control the operation of the switching portion 37 to selectively electrically couple the first supplemental electrical power source 34a, or the second supplemental electrical power source 34b, or both, to the secondary power bus 24 to receive electrical power therefrom. In non-limiting aspects, controller module 33 can be configured to select at least one supplemental electrical power source 34a, 34b to be selectively coupled to the secondary power bus 24. For example, the selection of the at least one supplemental electrical power source 34a, 34b can be based on a status (e.g., a state of charge) of the first supplemental electrical power source 34a, or the second supplemental electrical power source 34b, or both.

The selective electrical coupling of the second supplemental electrical power source 34b or the first supplemental electrical power source 34a can be further based at least in part on the first sensor signal 41a, second sensor signal 42a, the input signal 22a, an operating mode of the electrical power generating source 12, an operating mode of the aircraft 10, a status (e.g., a state of charge) of at least one supplemental electrical power source 34a, 34b, 34c of the set of at least two supplemental electrical power sources 34, and combinations thereof.

Additionally, in non-limiting aspects, the bi-directional power converter 32 can control the operation of the switching portion 37 to selectively electrically couple the second supplemental electrical power source 34b and the first supplemental electrical power source 34a, either sequentially or simultaneously, or a combination thereof, to the secondary power bus 24 to receive the charging portion 51b of the first current 51 therefrom. In non-limiting aspects, a magnitude of the charging portion 51b of the first current 51 can be based on a state of charge of the first supplemental electrical power source 34a, or the second supplemental electrical power source 34b, or both.

For example, in operation, the supplemental electrical power system 30 can receive the input signal 22a from the aircraft computer 22 indicating the aircraft 10 is in the charge mode. Based on the input signal 22a, the bi-directional power converter 32 can control the operation of the switching portion 37 to selectively electrically couple the second supplemental electrical power source 34b to the secondary power bus 24 to receive the charging portion 51b of the first current 51 therefrom. The bi-directional power converter 32 can keep the second supplemental electrical power source 34b coupled to the secondary power bus 24 for a predetermined period of time, or until the stored energy level or state of charge of the second supplemental electrical power source 34b reaches a predetermined level, or until the aircraft computer 22 provides the input signal 22a indicative that the aircraft 10 is no longer in the charge mode. Additionally, or alternatively, in such an instance wherein the bi-directional power converter 32 controls the switching portion 37 to selectively electrically decouple the second supplemental electrical power source 34b from the secondary power bus 24 prior to receiving the input signal 22a indicative that the aircraft 10 is no longer operating in the charge mode, the bi-directional power converter 32 can then control the operation of the switching portion 37 to selectively electrically couple the first supplemental electrical power source 34a to the secondary power bus 24 to receive the charging portion 51b of the first current 51 therefrom. The bi-directional power converter 32 can keep the first supplemental electrical power source 34a coupled to the secondary power bus 24 for a predetermined period of time, or until the stored energy level or state of charge of the first supplemental electrical power source 34a reaches a predetermined level, or until the aircraft computer 22 provides the input signal 22a indicative that the aircraft 10 is no longer operating in the charge mode.

It is contemplated that in some aspects, the supplemental electrical power system 30 can be configured to operate simultaneously in a charge mode and a discharge mode.

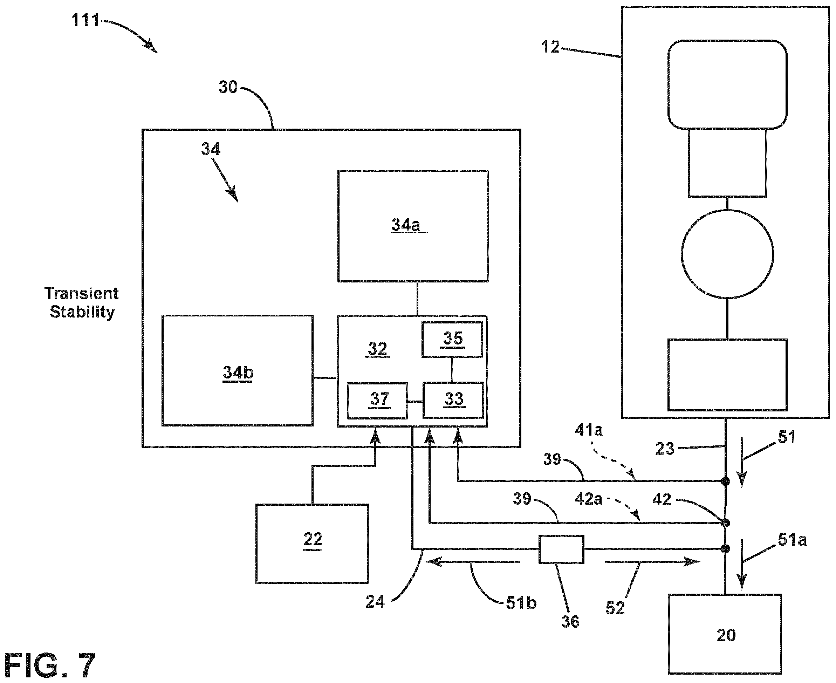

FIG. 7 is a schematic block diagram illustrating another aspect of the power distribution system 111, for example, during transient mode of the aircraft 10. The transient mode can occur during a flight of the aircraft 10 or during a ground operation. The aspect of FIG. 7 is similar to the aspect of FIG. 2, so like parts are labelled with like reference numbers. One notable non-limiting difference between the aspect depicted in FIG. 2, and the aspect of FIG. 7 is that the supplemental electrical power system 30 of FIG. 7 has only two supplemental electrical power sources, specifically a first supplemental electrical power source 34a, and a second supplemental electrical power source 34b. It is contemplated that aspects are not limited to the first supplemental electrical power source 34a and second supplemental electrical power source 34b, and other aspects can include the third supplemental electrical power source 34c (e.g., a capacitor), and/or additional supplemental electrical power sources 34, without departing from the scope of the disclosure. Another notable difference between the aspect depicted in FIG. 2, and the aspect of FIG. 7 is that in the example instance of FIG. 7, the first current 51 is split between a load portion 51a provided to the set of electrical loads 20 via the primary power bus 23, and a charging portion 51b provided to the supplemental electrical power system 30 via the secondary power bus 24 via primary power bus 23. Yet another notable difference between the aspect depicted in FIG. 2, and the aspect of FIG. 6 is that in the example instance of FIG. 6 the supplemental electrical power system 30 can further include a high pass-filter 36 electrically coupled in series with the secondary power bus 24, between the set of supplemental electrical power sources 34 and the primary power bus 23.

It is contemplated that during operation of the aircraft 10, the aircraft 10 can experience a transient mode of operation. For example, in one non-limiting instance the supplemental electrical power system 30 can be operating to provide the second current 52 to the primary power bus 23, for example, from the first supplemental electrical power source 34a (e.g., a battery), while the electrical power generating source 12 is providing the first current 51 to the primary power bus 23. It is contemplated that under certain conditions, one of the set of electrical loads 20 (e.g., a hydrostatic actuator or the like) can operate normally such that a relatively short duration (e.g., 2.5 millisecond) relatively low frequency (e.g. 40 Hz) current pulse or spike is generated on the primary power bus 23. In this instance, the set of sensors 41, 42 can provide the respective sensor signal 41a, 42a indicative a value of the first voltage on the primary power bus 23, and the second sensor signal 42a indicative of a value of the first current 51, respectively to the bi-directional power converter 32. Responsive to the respective sensor signal 41a, 42a, the bi-directional power converter 32 can be configured to control the operation of the switching portion 37 to selectively electrically couple the second supplemental electrical power source 34b (e.g., a fuel cell) to the secondary power bus 24 to receive the relatively short duration relatively low frequency current pulse as the charging portion 51b of the first current 51 from the primary power bus 23, while the load portion 51a is provided to the set of electrical loads.

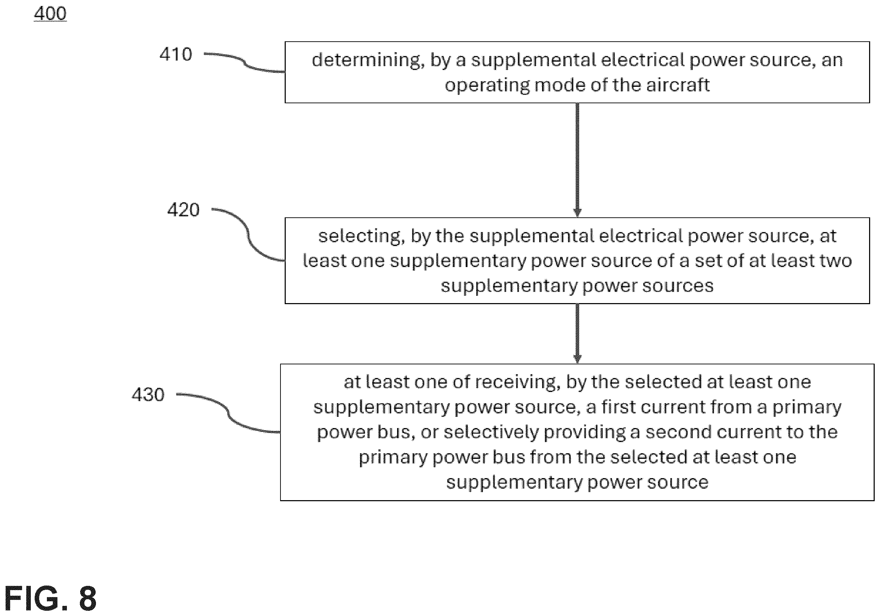

FIG. 8 depicts a method 400 of operating a power distribution system 11, 111 for an aircraft 10. Although described in terms of an aircraft, it will be appreciated that the method 400 can be applied to any power distribution system without departing from the disclosure herein. While the method 400 will be described herein, for ease of understanding, in terms of the power distribution system 11, 111 of FIGS. 1-7, other aspects are not so limited and the method 400 can be implemented in any environment without departing from the scope of the disclosure.

The power distribution system 11, 111 can include the at least one electrical power generating source 12, and the supplemental electrical power system 30. The at least one electrical power generating source 12 can be electrically coupled to the set of electrical loads 20 via the primary power bus 23. The supplemental electrical power system 30 is electrically coupled to the primary power bus 23 downstream of the at least one electrical power generating source 12 via the secondary power bus 24. Regardless of the specific power generating arrangement, the electrical power generating source 12 can be electrically coupled to the primary power bus 23, for example, to provide the first current 51thereto.

In non-limiting aspects, the first supplemental electrical power source 34a, the second supplemental electrical power source 34b, or the third supplemental electrical power source 34c can be DC electrical power storage devices. For example, in non-limiting aspects, the first supplemental electrical power source 34a, the second supplemental electrical power source 34b, or the third supplemental electrical power source 34c can include, without limitation, a respective dischargeable DC power storage device, such as a battery, a battery bank, a battery cell, a super capacitor, a fuel cell, a hydrogen cell, or a continuously or semi-continuous power conversion or supplying device, such as a solar cell, a wind turbine, or the like, and combinations thereof. It is contemplated that in some non-limiting aspects, the first supplemental electrical power source 34a, the second supplemental electrical power source 34b, or the third supplemental electrical power source 34c can further include associated circuitry, such as switching modules, to enable an AC voltage output of the DC power storage device. Regardless of the specific dischargeable supplemental electrical power sources 34, the supplemental electrical power system 30 is electrically coupled to the secondary power bus 24 to provide the second current 52 thereto.

The bi-directional power converter 32 can include a controller module 33, a memory 35, and a switching portion 37. The bi-directional power converter 32 is communicatively coupled to the aircraft computer 22 via the first data communication line 29. The bi-directional power converter 32 is electrically coupled to the secondary power bus 24 downstream of the electrical power generating source 12, and upstream of the set of electrical loads 20. The switching portion 37 can include any number of switching devices, such as contactors, relays, solid-state or semiconductive switches and the like, communicatively coupled to the controller module 33, and configured to selectively enable and disable an electrical connection of the at least two supplemental electrical power sources 34 to the secondary power bus 24.

The set of sensors 41, 42 can be communicatively coupled with the bi-directional power converter 32 via a respective second data communication line 39. In non-limiting aspects, the set of sensors can include a first sensor 41 and a second sensor 42. Non-limiting examples of the set of sensors 41, 42 can include a current sensor, a voltage sensor, or the like, arranged, adapted, or otherwise configured in various combinations to sense or measure a respective predetermined parameter such as an amount of power, voltage, current, or combinations thereof. The set of sensors 41, 42 can be communicatively coupled to the bi-directional power converter 32 to provide the respective first sensor signal 41a, and the second sensor signal 42a indicative of a value of the respective sensed parameter to the bi-directional power converter 32. The controller module 33 or the memory 35, or both, can be communicatively coupled with the set of sensors 41, 42. The set of sensors 41, 42 can provide, or the bi-directional power converter 32 can obtain, a respective sensor signal 41a, 42a indicative of the sensed parameters. For example, in non-limiting aspects, the bi-directional power converter 32 can receive, via a respective data communication line 29, 39, one or more of a first sensor signal 41a indicative of a value of a first voltage on the primary power bus 23, a second sensor signal 42a indicative of a value of the first current 51.

The method 400 begins at 410 by determining, by the supplemental electrical power system 30, an operating mode of the aircraft 10. In non-limiting aspects, the supplemental electrical power system 30 can determine the operating mode of the aircraft 10 based on the input signal 22a to the bi-directional power converter 32 from the aircraft computer 22.

The method 400 can include at 420, selecting, by the supplemental electrical power system 30, at least one supplemental electrical power source 34a, 34b, 34c of the set of at least two supplemental electrical power sources 34. The selecting the at least one supplemental electrical power source 34a, 34b, 34c of the set of at least two supplemental electrical power sources 34 can be based on a mode of operation of the aircraft 10 and/or a set of sensed parameters and a set of predefined parameter values. In non-limiting aspects, the selecting the at least one supplemental electrical power source 34a, 34b, 34c of the set of at least two supplemental electrical power sources 34 can be based at least in part on the first sensor signal 41a, second sensor signal 42a, the input signal 22a, an operating mode of the electrical power generating source 12, the operating mode of the aircraft 10, a status (e.g., a state of charge) of at least one supplemental electrical power source 34a, 34b, 34c of the set of at least two supplemental electrical power sources 34, and combinations thereof.

Based on the determined operating mode of the aircraft, the method 400 can include, at 430, at least one of receiving, by the selected at least one supplemental electrical power source 34a, 34b, 34c of the set of at least two supplemental electrical power sources 34, a first current 51 from the primary power bus 23, or selectively providing a second current 52 to the primary power bus 23 from the selected at least one supplemental electrical power source 34a, 34b, 34c of the set of at least two supplemental electrical power sources 34.

In non-limiting aspects of the method 400, in response to a determination that the operating mode of the aircraft 10 is a start mode, the selectively providing, by the bi-directional power converter 32, the second current 52 from the supplemental electrical power system 30 to the primary power bus 23 can include selectively providing the second current 52 from the selected at least one supplemental electrical power source 34a, 34b, 34c of the set of at least two supplemental electrical power sources 34 to the electrical power generating source 12.

In non-limiting aspects of the method 400, in response to a determination that the operating mode of the aircraft 10 is an engine core assist mode, the providing, by the bi-directional power converter 32, the second current 52 from the supplemental electrical power system 30 to the primary power bus 23 includes selectively providing the second current 52 from the selected at least one supplemental electrical power source 34a, 34b, 34c of the set of at least two supplemental electrical power sources 34 to at least one of the set of electrical loads 20 or the electrical power generating source 12.

In non-limiting aspects of the method 400, in response to a determination that the operating mode of the aircraft 10 is an emergency power mode, the bi-directional power converter 32 is configured to selectively provide the second current 52 from the selected at least one supplemental electrical power source 34a, 34b, 34c of the set of at least two supplemental electrical power sources 34 to the set of electrical loads 20.

In non-limiting aspects of the method 400, in response to a determination that the operating mode of the aircraft 10 is a charge mode, the receiving by the bi-directional power converter 32 the first current 51 from the primary power bus 23 includes selectively providing the first current 51 to the selected at least one supplemental electrical power source 34a, 34b, 34c of the set of at least two supplemental electrical power sources 34.

In non-limiting aspects of the method 400, in response to a determination that the operating mode of the aircraft 10 is a transient mode, the receiving by the bi-directional power converter 32 the first current 51 from the primary power bus 23 can include receiving a charging portion 51b of the first current 51 from the electrical power generating source 12, and to selectively providing the charging portion 51b of the first current 51 to the selected at least one supplemental electrical power source 34a, 34b, 34c of the set of at least two supplemental electrical power sources 34, and further providing the second current 52 from the selected at least one supplemental electrical power source 34a, 34b, 34c of the set of at least two supplemental electrical power sources 34 to the set of electrical loads 20.

The sequence depicted is for illustrative purposes only and are not meant to limit the aspects of the disclosure in any way, as it is understood that the portions of the disclosure of application thereof can proceed in a different logical order, additional or intervening portions can be included, or described portions of the method can be divided into multiple portions, or described portions of the method can be omitted without detracting from the described method.

Many other possible aspects and configurations in addition to that shown in the above figures are contemplated by the present disclosure. For instance, aspects of the disclosure can apply to additional power transfer operations, including but not limited to, transferring power (e.g. on a power bus) between aircraft ground-based power supplies (e.g. a ground power cart or terminal power) to an auxiliary power unit, or to generator that has recently been started. Additionally, while aspects of the disclosure have been described as allowing or enabling power transfer capabilities between variable frequency generators, the disclosure can be utilized to allow or enable matching, harmonizing, or otherwise no-break power transfer capabilities between one or more variable frequency generators, one or more constant frequency generators, emergency power sources (e.g. ram air turbines), the like, or a combination thereof.

To the extent not already described, the different features and structures of the various aspects can be used in combination with each other as desired. That one feature cannot be illustrated in all of the aspects is not meant to be construed that it cannot be, but is done for brevity of description. Thus, the various features of the different aspects can be mixed and matched as desired to form new aspects, whether or not the new aspects are expressly described. Combinations or permutations of features described herein are covered by this disclosure.

It is contemplated that aspects of this disclosure can be advantageous for use over conventional electrical power distribution systems. Use of a common power converter, electrically coupled to a set of at least two supplemental electrical power sources, enables a simpler, lower cost system over conventional power distribution systems employing respective power converters for each supplemental power source. Furthermore, aspects employing the common power converter coupled to the set of at least two supplemental electrical power sources of an aircraft enables selective operation by the power converter, of the at least two supplemental electrical power sources based on a status of the at least two supplementary power sources, an operating mode of the aircraft, or both. Aspects as described herein are adaptable to optimize the operation of the power converter to meet power quality, bus stability, and transient requirements of the power distribution system and the aircraft, while still retaining high efficiency.

In particular, aspects of the disclosure are advantageous for use in aircraft electrical power systems. Aspects having the common power converter, electrically coupled to a set of at least two supplemental electrical power sources provides a significant weight reduction over conventional aircraft power systems having supplemental power sources. Moreover, aspects as described herein are dynamically adaptable to meet the various power requirements that vary significantly depending on the operational mode of the aircraft.

This written description uses examples to disclose aspects of the disclosure, including the best mode, and also to enable any person skilled in the art to practice aspects of the disclosure, including making and using any devices or systems and performing any incorporated methods. The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims. Further aspects of the present disclosure are provided by the subject matter of the following clauses:

A power distribution system for an aircraft, the aircraft including an aircraft computer, comprising: a power generating source electrically coupled to an electrical load via a primary power bus; a supplemental electrical power system including: a bi-directional power converter communicatively coupled to the aircraft computer and electrically coupled to the primary power bus, via a secondary power bus, a set of at least two supplementary power sources electrically coupled to the bi-directional power converter; wherein the bi-directional power converter is configured to: determine an operating mode of the aircraft; select at least one supplementary power source of the set of at least two supplementary power sources; and, based on the operating mode of the aircraft, at least one of receive, by the selected at least one supplementary power source of the set of at least two supplementary power sources, a first current from the primary power bus, or provide a second current to the primary power bus from the selected at least one supplementary power source.

The power distribution system of any preceding clause, wherein the set of at least two supplementary power sources includes a first supplementary power source and a second supplementary power source, wherein the first supplementary power source is a battery and the second supplementary power source is one of a fuel cell.

The power distribution system of any preceding clause, wherein the set of at least two supplementary power sources includes a third supplementary power source, wherein the third supplementary power source is a capacitor.

The power distribution system of any preceding clause, wherein the set of at least two supplementary power sources includes a first supplementary power source and a second supplementary power source, wherein the first supplementary power source is a battery, and the second supplementary power source is a capacitor.

The power distribution system of any preceding clause, wherein the bi-directional power converter is further configured to determine a status of at least one supplementary power source of the set of at least two supplementary power sources.

The power distribution system of any preceding clause, wherein the bi-directional power converter is further configured to select the at least one supplementary power source of the set of at least two supplementary power sources based at least in part on the status of the at least one supplementary power source.

The power distribution system of any preceding clause, wherein the bi-directional power converter is configured to determine the operating mode of the aircraft based on an input signal from the aircraft computer.

The power distribution system of any preceding clause, wherein in response to a determination by the bi-directional power converter that the operating mode of the aircraft is a start mode, the bi-directional power converter is configured to selectively provide the second current from the selected at least one supplementary power source to the power generating source.

The power distribution system of any preceding clause, wherein in response to a determination by the bi-directional power converter that the operating mode of the aircraft is an engine core assist mode, the bi-directional power converter is configured to selectively provide the second current from the selected at least one supplementary power source to at least one of the electrical load or the power generating source.

The power distribution system of any preceding clause, wherein in response to a determination by the bi-directional power converter that the operating mode of the aircraft is an emergency power mode, the bi-directional power converter is configured to selectively provide the second current from the selected at least one supplementary power source to the electrical load.

The power distribution system of any preceding clause, wherein in response to a determination by the bi-directional power converter that the operating mode of the aircraft is a charge mode, the bi-directional power converter is configured to receive the first current from the primary power bus, and to selectively provide the first current to the selected at least one supplementary power source.

The power distribution system of any preceding clause, wherein in response to a determination by the bi-directional power converter that the operating mode of the aircraft is a transient mode, the bi-directional power converter is configured to receive a charging portion of the first current from the power generating source, and to selectively provide the charging portion of the first current to the selected at least one supplementary power source, and further provide the second current from the selected at least one supplementary power source to the electrical load.

The power distribution system of any preceding clause, further including a high-pass filter electrically coupled to the secondary power bus, wherein bi-directional power converter is configured to receive the charging portion of the first current from the primary power bus via the high-pass filter, and to further provide the second current from the selected at least one supplementary power source to the primary power bus.

A method of operating an electrical power distribution system for an aircraft, the aircraft including an aircraft computer, and a power-generating source electrically coupled to an electrical load via a primary power bus, and a supplemental electrical power system communicatively coupled to the aircraft computer and electrically coupled to the primary power bus, via a secondary power bus, the supplemental electrical power system including a bi-directional power converter electrically coupled to a set of at least two supplementary power sources, the method comprising: determining, by the supplemental electrical power system, an operating mode of the aircraft; selecting, by the supplemental electrical power system, at least one supplementary power source of the set of at least two supplementary power sources; and, based on the operating mode of the aircraft, at least one of receiving, by the selected at least one supplementary power source, a first current from the primary power bus, or selectively providing a second current to the primary power bus from the selected at least one supplementary power source.

The method of any preceding clause, wherein the selecting at least one supplementary power source of the set of at least two supplementary power sources includes determining a status of the set of at least two supplementary power sources.

The method of any preceding clause, wherein the selecting the at least one supplementary power source of the set of at least two supplementary power sources is based upon the status of the at least one supplementary power source.

The method of any preceding clause, wherein the determining, by the supplemental electrical power system, the operating mode of the aircraft is based on an input signal to the bi-directional power converter from the aircraft computer.

The method of any preceding clause, wherein in response to a determination that the operating mode of the aircraft is a start mode, the selectively providing the second current to the primary power bus from the selected at least one supplementary power source includes providing the second current to the power generating source.

The method of any preceding clause, wherein in response to a determination that the operating mode of the aircraft is engine core assist, the providing the second current to the primary power bus from the selected at least one supplementary power source includes providing the second current to at least one of the electrical load or the power generating source.

The method of any preceding clause, wherein in response to a determination that the operating mode of the aircraft is an emergency power mode, the providing the second current to the primary power bus from the selected at least one supplementary power source includes providing the second current to the electrical load.

## Claims

1. A power distribution system (11), (111) for an aircraft (10), the aircraft including an aircraft computer (22), comprising:
a power generating source (12) electrically coupled to an electrical load (20) via a primary power bus (23);
a supplemental electrical power system (30) including:
a bi-directional power converter (32) communicatively coupled to the aircraft computer (22) and electrically coupled to the primary power bus (23), via a secondary power bus (24),
a set of at least two supplementary power sources (34) electrically coupled to the bi-directional power converter (32); wherein the bi-directional power converter (32) is configured to:
determine an operating mode of the aircraft (10);
select at least one supplementary power source (34a), (34b), (34c) of the set of at least two supplementary power sources (34); and,
based on the operating mode of the aircraft (10), at least one of receive, by the selected at least one supplementary power source (34a), (34b), (34c) of the set of at least two supplementary power sources (34), a first current (51) from the primary power bus (23), or provide a second current (52) to the primary power bus (23) from the selected at least one supplementary power source (34a), (34b), (34c).

2. The power distribution system (11), (111) of claim 1, wherein the bi-directional power converter (32) is further configured to determine a status of at least one supplementary power source (34a), (34b), (34c) of the set of at least two supplementary power sources (34); and
wherein the bi-directional power converter (32) is further configured to select the at least one supplementary power source (34a), (34b), (34c) of the set of at least two supplementary power sources (34) based at least in part on the status.

3. The power distribution system (11), (111) of any preceding claim, wherein in response to a determination by the bi-directional power converter (32) that the operating mode of the aircraft (10) is a start mode, the bi-directional power converter (32) is configured to selectively provide the second current (52) from the selected at least one supplementary power source (34a), (34b), (34c) to the power generating source.

4. The power distribution system (11), (111) of any preceding claim, wherein in response to a determination by the bi-directional power converter (32) that the operating mode of the aircraft (10) is an engine core assist mode, the bi-directional power converter (32) is configured to selectively provide the second current (52) from the selected at least one supplementary power source (34a), (34b), (34c) to at least one of the electrical load (20) or the power generating source (12).

5. The power distribution system (11), (111) of any preceding claim, wherein in response to a determination by the bi-directional power converter (32) that the operating mode of the aircraft (10) is an emergency power mode, the bidirectional power converter (32) is configured to selectively provide the second current (52) from the selected at least one supplementary power source (34a), (34b), (34c) to the electrical load (20) .

6. The power distribution system (11), (111) of any preceding claim, wherein in response to a determination by the bi-directional power converter (32) that the operating mode of the aircraft (10) is a charge mode, the bi-directional power converter (32) is configured to receive the first current (51) from the primary power bus (23), and to selectively provide the first current (51) to the selected at least one supplementary power source (34a), (34b), (34c).

7. The power distribution system (11), (111) of any preceding claim, wherein in response to a determination by the bi-directional power converter (32) that the operating mode of the aircraft (10) is a transient mode, the bi-directional power converter (32) is configured to receive a charging portion (51b) of the first current (51) from the power generating source (12), and to selectively provide the charging portion (51b) of the first current (51) to the selected at least one supplementary power source (34a), (34b), (34c), and further provide the second current (52) from the selected at least one supplementary power source (34a), (34b), (34c) to the electrical load (20) .

8. The power distribution system (11), (111) of claim 7, further including a high-pass filter (36) electrically coupled to the secondary power bus (24), wherein bi-directional power converter (32) is configured to receive the charging portion (51b) of the first current (51) from the primary power bus (23) via the high-pass filter (36), and to further provide the second current (52) from the selected at least one supplementary power source (34a), (34b), (34c) to the primary power bus (23).

9. A method (400) of operating an electrical power distribution system (11), (111) for an aircraft (10), the aircraft (10) including an aircraft computer (22), and a power-generating source (12)electrically coupled to an electrical load (20) via a primary power bus (23), and a supplemental electrical power system (30) communicatively coupled to the aircraft computer (22) and electrically coupled to the primary power bus (23), via a secondary power bus (24), the supplemental electrical power system (30) including a bi-directional power converter (32) electrically coupled to a set of at least two supplementary power sources (34), the method (400) comprising:
determining, by the supplemental electrical power system (30), an operating mode of the aircraft (10);
selecting, by the supplemental electrical power system (30), at least one supplementary power source (34a), (34b), (34c) of the set of at least two supplementary power sources (34); and
based on the operating mode of the aircraft (10), at least one of receiving, by the selected at least one supplementary power source (34a), (34b), (34c), a first current (51) from the primary power bus (23), or providing a second current (52) to the primary power bus (23) from the selected at least one supplementary power source (34a), (34b), (34c).

10. The method (400) of claim 9, wherein the selecting at least one supplementary power source (34a), (34b), (34c) of the set of at least two supplementary power sources (34) includes determining a status of the set of at least two supplementary power sources (34).

11. The method (400) of claim 10, wherein the selecting the at least one supplementary power source (34a), (34b), (34c) of the set of at least two supplementary power sources (34) is based upon the status.

12. The method (400) of any of claims 9 to 11, wherein the determining, by the supplemental electrical power system (30), an operating mode of the aircraft (10) is based on an input signal (22a) to the bi-directional power converter (32) from the aircraft computer (22).

13. The method (400) of any of claims 9 to 12, wherein in response to a determination that the operating mode of the aircraft (10) is a start mode, the selectively providing, the second current (52) to the primary power bus (23) from the selected at least one supplementary power source (34a), (34b), (34c) includes providing the second current (52) from the selected at least one supplementary power source (34a), (34b), (34c) to the power generating source (12).

14. The method (400) of any of claims 9 to 13, wherein in response to a determination that the operating mode of the aircraft (10) is engine core assist, the providing to the primary power bus (23) from the selected at least one supplementary power source (34a), (34b), (34c) includes providing the second current (52) to at least one of the electrical load (20) or the power generating source (12).

15. The method (400) of any of claims 9 to 14, wherein in response to a determination that the operating mode of the aircraft (10) is an emergency power mode, the providing the second current (52) to the primary power bus (23) from the selected at least one supplementary power source (34a), (34b), (34c) includes providing the second current (52) to the electrical load (20).
